# EUROPEAN PATENT SPECIFICATION

(11) **EP 2 818 300 B1**
(45) Date of publication and mention of the grant of the patent: **06.11.2019**
(21) Application number: 14173513.4
(22) Date of filing: 23.06.2014
(51) Int. Cl.: B29C 49/00, F16L 9/127, B29C 49/42, F16L 57/06, F16L 55/02, F15D 1/04, B64D 41/00, B29K 79/00, B29K 71/00, B29K 81/00, B29K 105/16, B29K 105/06, B29K 77/00, B29K 309/08, B29L 23/00, F16L 9/00

(54) **Suction-blow-molded aircraft ducting**
Saugblasgeformte Flugzeugleitung
Conduites d'aéronef moulées par soufflage et aspiration

(30) Priority: 24.06.2013 US 201361838586 P
(43) Date of publication of application: 31.12.2014
(73) Proprietor: Hamilton Sundstrand Corporation, Charlotte, NC 28217 (US)
(72) Inventor: Wysocki, Gary R., Somers, CT 06071 (US); Brown, Ricardo O., West Hartford, CT 06117 (US)
(74) Representative: Dehns

(56) References cited:
- EP-A1- 1 944 150
- FR-A1- 2 942 018
- US-A- 4 282 277
- US-A1- 2007 065 615
- US-A1- 2007 157 598
- US-B1- 6 688 680

## Description

### BACKGROUND OF INVENTION

This invention relates, generally, to ducts and, more specifically, to aerospace ducts manufactured by suction-blow-molding technology.

Aircraft ducts for moving fluids such as air or liquid throughout various aircraft systems have historically been manufactured from bending tubing or rotomolding of plastics. The tubing is formed by, for example, aluminum or steel. Another option has been to utilize a composite lay-up to form a hollow three-dimensional geometry shape.

It is desirable to rapidly and effectively process low-volume aerospace hardware at a low cost. More specifically, it is desirable to so process engineering thermoplastic ducts that are suitable for the aerospace industry.

A tubular article and method having the features of the preambles of claims 1 and 2 are disclosed in US 2007/0065615 A1. A moulded cross vehicle beam is disclosed in US-6688680 B1 and a suction blowmold having a cavity is disclosed in EP 1944150 A1.

The document FR 2 942 018 discloses a duct of an aircraft comprising a hollow three-dimensional geometry shape that is formed of thermoplastic, wherein the thermoplastic is reinforced polyetheretherketone (PEEK) and wherein at least one component is formed by SLS in an inner wall of the duct, wherein the duct encloses the component and is configured to at least guide an airflow towards and across surfaces of the component.

### BRIEF DESCRIPTION OF INVENTION

The present invention provides a duct of an aircraft as recited in claim 1, and a method of manufacturing a duct of an aircraft as recited in claim 2.

### BRIEF DESCRIPTION OF DRAWING

The subject matter that is regarded as the invention is particularly pointed out and distinctly claimed in the claims at the conclusion of the specification. The foregoing and other features and advantages of the invention are apparent from the following detailed description taken in conjunction with the accompanying drawing in which:
FIG. 1 is a perspective view of an exemplary non-limiting exemplary embodiment of a suction-blow-molded thermoplastic aircraft duct according to the invention.
FIG. 2 is a flowchart showing an exemplary non-limiting embodiment of a method of manufacturing the suction-blow-molded thermoplastic aircraft duct illustrated in FIG. 1 according to the invention.

### DETAILED DESCRIPTION OF INVENTION

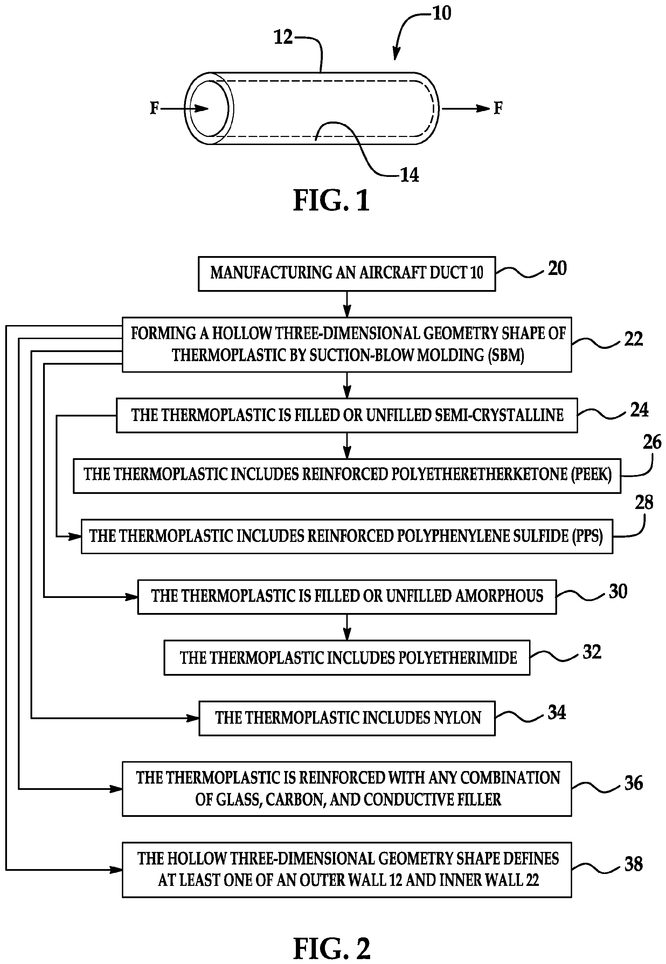

Referring now specifically to FIG. 1, an exemplary non-limiting exemplary embodiment of a suction-blow-molded thermoplastic aircraft or aerospace duct or ducting according to the invention is generally indicated at 10. It should be appreciated that, although the duct 10 is disclosed herein as being implemented for aircraft systems, the duct 10 can be implemented for any suitable system. It should be appreciated also that, although the duct 10 is disclosed herein as being a cooling duct 10, the duct 10 can be any suitable type of duct. It should be appreciated also that the duct 10 can have any suitable shape, size, and structure. It should be appreciated also that each structural element of the duct 10 can have any suitable shape, size, and structure and the structural elements can have any suitable relationship with each other. It should be appreciated also that the invention can be implemented with components of the duct 10 as well (including, without limitation, flange attachments, bead geometry, and plating for aerospace applications).

The duct 10 is a hollow three-dimensional geometry shape that is formed of thermoplastic by suction-blow molding. More specifically, the duct 10 is a rigid passage configured for moving fluids such as air or liquid throughout various systems of an aircraft. The duct 10 includes an outer wall 12 that carries cooling airflow "F" through the duct 10, is a structural outer casing of the duct 10, and may, for instance, be a surface of a supporting chassis. At least one component is mounted to an inner wall 14 of the duct 10. The duct 10 encloses the component and-to limit or substantially avoid damage, decreased lifetime, or deterioration of the component-is configured to at least guide the airflow "F" toward and across surfaces of the component.

The duct 10 is depicted as straight and defining a circular cross-section of the duct 10. In other exemplary non-limiting embodiments, the duct 10 may define another curved or polygonal cross-section. Bearing in mind that increased curvatures restrict the airflow "F," some exemplary non-limiting embodiments may even feature turns or bends that impose a change in direction of the airflow "F." Alternatively, the duct may be a simple, straight rectangular duct 10.

Regardless of the embodiments, the duct 10 is formed of thermoplastic by suction-blow molding (SBM). More specifically, any combination of structural elements-e.g, the outer wall 12 and inner wall 14-that make up the duct 10 is formed in this way.

In one aspect, the thermoplastic used to form the duct 10 includes reinforced polyetheretherketone (PEEK). Reinforcements for SBM can be any combination of glass, carbon, conductive filler, etc. PEEK is colorless, an organic polymer in the polyaryletherketone (PAEK) family, and semi-crystalline with high mechanical- and chemical-resistance properties that are retained to high temperatures. Processing conditions used to mold PEEK can influence crystallinity and, hence, mechanical properties. Young's modulus of PEEK is 3.6 Gpa, and its tensile strength is 90 to 100 Mpa. PEEK further has a glass-transition temperature of about 143° C (289° F) and melts around 343° C (662° F). Some grades of PEEK have a useful operating temperature of up to 250° C (482° F). Thermal conductivity of PEEK increases nearly linearly versus temperature between room temperature and solidus temperature. PEEK is further highly resistant to thermal degradation as well as attack by both organic and aqueous environments, robust, and compatible with "ultra-high vacuum" applications. PEEK further allows shape-memory behavior with mechanical activation. Additives can include carbon, glass, minerals, and conductive additives.

In another arrangement, which falls outside the scope of the present invention, the thermoplastic used to form the duct 10 includes reinforced polyphenylene sulfide (PPS). PPS is a polymer that resists chemical and thermal attack and can be molded, extruded, or machined to high tolerances. In its pure solid form, PPS further may be opaque white to light tan. Maximum service temperature of PPS is 218° C (424° F) and has not been found to dissolve in any solvent below about 200° C (392° F). PPS further exhibits desirable "high temperature" properties, including resistance to heat, acids, alkalies, mildew, bleaches, aging, sunlight, and abrasion. PPS further absorbs only small amounts of solvents and resists dyeing.

Both PEEK and PPS are semi-crystalline thermoplastics with high thermal stability, chemical resistance, and flame-retardance and sound mechanical properties. These materials, when used in SBM, produce lightweight, thin-walled, complex three-dimensional geometry shapes for the duct 10.

In still another aspect, the thermoplastic used to form the duct 10 includes polyetherimide (PEI). PEI is amorphous and amber-to-transparent with characteristics similar to those of PEEK, to which PEI is related. However, there are properties of both that are different with respect to each other (e.g., glass-transition temperature). Also, PEI is amorphous, and PEEK is semi-crystalline.

In another arrangement, which falls outside the scope of the present invention, the thermoplastic used to form the duct 10 includes nylon.

The duct 10 is configured to be operable in a temperature range of -65° F (-54°C) to 400° F (204°C) (PEEK) or -65° F (-54°C) to 300° F (149°C) (PPS) at 100 psig (689 kPa). The duct 10 also defines a "wall thickness" of 0.020 (0.508 mm) in to 0.125 in (3.175 mm).

Referring now specifically to FIG. 2, an exemplary non-limiting embodiment of a method of manufacturing the duct 10 is generally indicated at 20. The method 20 includes a step 22 of forming a hollow three-dimensional geometry shape of thermoplastic by SBM. With respect to SBM, molten plastic is supported by air to form a hollow tube called a "parison." The tube is sucked into a mold cavity and formed with blow air.

At step 24, the thermoplastic is filled or unfilled semi-crystalline. In one aspect, at step 26, the thermoplastic includes reinforced PEEK. In another aspect which falls outside the scope of the present invention, at step 28, the thermoplastic includes reinforced PPS. At step 30, the thermoplastic is filled or unfilled amorphous. In one aspect, at step 32, the thermoplastic includes PEI. In another aspect which falls outside the scope of the present invention, at step 34, the thermoplastic includes nylon. At step 36, the thermoplastic is reinforced with any combination of glass, carbon, conductive filler, etc. At step 38, the hollow three-dimensional geometry shape defines the outer wall 12 and/or inner wall 14.

The method 20 allows for rapid, low-cost, effective molding of complex, three-dimensional, thermoplastic, geometry shapes, such as the duct 10. The duct 10 produced by the method 20 is thermally stable, chemically resistant, flame-retardant, lightweight, thin-walled and has sound mechanical properties. Furthermore, the duct 10 is operable within a range of -65° F (-54°C) to 400° F (204°C) (PEEK) or -65° F (-54°C) to 300° F (149°C) (PPS) at 100 psig (689 kPa). Moreover, the duct 10 defines a "wall thickness" of 0.020 in (0.508 mm) to 0.125 in (3.175 mm).

While the invention has been described in detail in connection with only a limited number of embodiments, it should be readily understood that the invention is not limited to such disclosed embodiments. Rather, the invention can be modified to incorporate any number of variations, alterations, substitutions, or equivalent arrangements not heretofore described, but which are commensurate with the scope of the invention. Additionally, while various exemplary non-limiting embodiments of the invention have been described, it is to be understood that aspects of the invention may include only some of the described embodiments. Accordingly, the invention is not to be seen as limited by the foregoing description, but is only limited by the scope of the appended claims.

## Claims

1. A duct (10) of an aircraft comprising:
a hollow three-dimensional geometry shape that is formed of thermoplastic wherein the thermoplastic;
is filled or unfilled semi-crystalline and includes reinforced polyetheretherketone (PEEK); or
is filled or unfilled amorphous and includes polyetherimide (PEI);
wherein the duct (10) encloses a
component and is configured to at least guide an airflow (F) towards and across surfaces of the component **characterised in that** the at least one component is mounted to an inner wall of the duct and the duct is formed by suction-blow molding.

2. A method of manufacturing a duct (10) of an aircraft comprising a step of:
forming a hollow three-dimensional geometry shape of thermoplastic wherein the thermoplastic;
is filled or unfilled semi-crystalline and includes reinforced polyetheretherketone (PEEK); or
is filled or unfilled amorphous and includes polyetherimide (PEI);
wherein the duct (10) encloses a
component and is configured to at least guide an airflow (F) towards and across surfaces of the component **characterised in that** the at least one component is mounted to an inner wall of the duct and the duct is formed by suction-blow molding.

3. The duct or method of any preceding claim, wherein the thermoplastic is reinforced with any combination of glass, carbon, and conductive filler.

## Patentansprüche

1. Leitung (10) eines Flugzeugs, die Folgendes umfasst:
eine hohle dreidimensionale Geometrieform, die aus einem Thermoplasten ausgebildet ist, wobei der Thermoplast;
gefüllt oder ungefüllt semikristallin ist und verstärktes Polyetheretherketon (PEEK) beinhaltet; oder
gefüllt oder ungefüllt amorph ist und Polyetherimid (PEI) beinhaltet;
wobei die Leitung (10) eine Komponente umschließt und dazu konfiguriert ist, eine Luftströmung (F) mindestens in Richtung von Flächen der Komponente und darüber zu leiten, **dadurch gekennzeichnet, dass** die mindestens eine Komponente an eine Innenwand der Leitung montiert ist und die Leitung durch ein Saugblasformen gebildet ist.

2. Verfahren zum Herstellen einer Leitung (10) eines Luftfahrzeugs, das einen folgenden Schritt umfasst:
Bilden einer hohlen dreidimensionalen Geometrieform aus einem Thermoplasten, wobei der Thermoplast;
gefüllt oder ungefüllt semikristallin ist und verstärktes Polyetheretherketon (PEEK) beinhaltet; oder
gefüllt oder ungefüllt amorph ist und Polyetherimid (PEI) beinhaltet;
wobei die Leitung (10) eine Komponente umschließt und dazu konfiguriert ist, eine Luftströmung (F) mindestens in Richtung von Flächen der Komponente und darüber zu leiten, **dadurch gekennzeichnet, dass** die mindestens eine Komponente an eine Innenwand der Leitung montiert ist und die Leitung durch ein Saugblasformen gebildet ist.

3. Leitung oder Verfahren nach einem der vorhergehenden Ansprüche, wobei der Thermoplast mit jeglicher Kombination aus Glas, Kohlenstoff und einem leitenden Füllstoff verstärkt ist.

## Revendications

1. Conduite (10) d'un aéronef comprenant :
une forme géométrique tridimensionnelle creuse qui est constituée de thermoplastique, dans laquelle le thermoplastique ;
est semi-cristallin, chargé ou non chargé et comporte de la polyétheréthercétone (PEEK) renforcée ; ou
est amorphe, chargé ou non chargé, et comporte du polyétherimide (PEI) ;
dans laquelle la conduite (10) renferme un composant et est conçue pour guider au moins un écoulement d'air (F) vers et à travers des surfaces du composant, **caractérisée en ce que** l'au moins un composant est monté sur une paroi interne de la conduite et la conduite est formée par moulage par aspiration-soufflage.

2. Procédé de fabrication d'une conduite (10) d'un aéronef comprenant une étape :
de façonnage d'une forme géométrique tridimensionnelle creuse en thermoplastique, dans lequel le thermoplastique ;
est semi-cristallin, chargé ou non chargé, et comporte de la polyétheréthercétone (PEEK) renforcée ; ou
est amorphe, chargé ou non chargé, et comporte du polyétherimide (PEI) ;
dans lequel la conduite (10) renferme un composant et est conçu pour guider au moins un écoulement d'air (F) vers et à travers des surfaces du composant, **caractérisé en ce que** l'au moins un composant est monté sur une paroi interne de la conduite et la conduite est formé par moulage par aspiration-soufflage.

3. Conduite ou procédé selon une quelconque revendication précédente, dans lequel le thermoplastique est renforcé avec une quelconque combinaison de verre, de carbone, et de charge conductrice.
